# EUROPEAN PATENT APPLICATION

(11) **EP 1 923 651 A1**
(43) Date of publication of application: **21.05.2008**
(21) Application number: 06447123.8
(22) Date of filing: 20.11.2006
(51) Int. Cl.: F28D 5/00, F02C 7/143, F02C 7/052

(54) **A gas intake system**

(71) Applicant: Donaldson Company, Inc., Minneapolis MN 55440 (US)
(72) Inventor: Cuvelier, Léon, 1320 Hamme-Mille (BE)
(74) Representative: Bird, William Edward

(57) **Abstract**

A gas intake system as subject of the present invention comprises
• a gas pickup means for taking in gas,
• a gas filter located downstream the gas pickup means and
• a gas chilling means for chilling intake gas, the gas chilling means having an inflow side for receiving intake gas and an outflow side for providing chilled gas to the gas filter, the gas chilling means for chilling intake gas being adapted to provide chilled gas having a dry bulb temperature and a wet bulb temperature, the dry bulb temperature being larger than the wet bulb temperature of the chilled air.

The gas chilling means comprises a means to divide the intake gas in a first gas stream and a second gas stream. The gas chilling means has a direct contact chilling means for chilling the first gas stream by directly contacting of the first gas stream with a chilling fluid, and has a guiding means for guiding the second gas stream to the outflow side. The guiding means prevents the second gas stream to directly contact the chilling fluid. The first and the second gas stream are merged for providing chilled gas at the outflow side of the gas chilling means.

## Description

### Technical field of the invention

The present invention relates to a gas intake system, such as an air intake system, e.g. the gas intake system of a gas compression system and/or a turbine unit, e.g. a turbine unit combusting combustible gasses. The present invention further relates to a method of operating a gas intake system, e.g. for increasing the loading time of a gas filter of such a gas intake system or to avoid pressure peaks over a gas filter, and to a method to reduce the temperature of the gas provided to the gas compressing means of an existing gas compression system.

### Background of the invention

Air intake systems, which form part of larger systems such as gas intake systems or turbine units, are well known for many years. Similar gas intake systems used in industrial processes, usually chemical processes, where process gas is to be compressed, are known.

The gas intake systems usually comprise some major components installed in this order in gas flow direction: a gas pickup means, a gas filter and optionally, a gas conditioning means, each means having its own particular function.

As an example an air intake system of a turbine unit comprises an air pickup means. The air pickup means is the most upstream part of the system, via which air from the environment, or ambient air, is taken in. The air pickup means comprises several parts which e.g. prevent dangerous parts to be drafted in with the air intake. Means are provided to prevent e.g. rain and snow and alike to enter into the air intake. A set of sheds may be provided to prevent entrance of rain and snow in the air intake of an air intake system, e.g. of a turbine unit. The air pickup means may optionally, comprise a defogging means to prevent water droplets and alike to be drafted in the compression system.

Further downstream in the air stream direction, an air filter for removal of larger and smaller contaminants and particles from the ambient air is provided. This air filter ensures that the air provided to the downstream elements does not comprise particles, which may harm these elements, such as e.g. sand particles and alike, which may harm e.g. turbine or compressor blades and alike.

Behind this air filter, the air conditioning means may be installed. After the air filter, a compressing means such as an air compressor may be provided. Air intake system and air compressor together are considered the air compression system which itself may be part of e.g. a turbine unit, e.g. a gas turbine unit, which turbine unit further comprises a combustion chamber and a turbine, which turbine drives the compressing means, and which turbine drives machinery such as generators for providing electric current and alike. Optionally, between the air filter and the compressing means, a silencing unit may be installed.

It is known that gas turbine operating power is sensitive to the inlet combustion air temperature. Cooled air is denser and therefore gives the turbine a higher mass-flow rate and pressure ratio resulting in increased turbine output and efficiency.

Several techniques are known to increase the power output capacity such gas turbines. Often cooling of intake air is used, e.g. in hot geographical regions such as desert. As an example, Donaldson Company (Minneapolis USA) supplies evaporative coolers and chiller coil systems to be installed between the air filter and the compressing means to provide colder, i.e. more dense air to the compressing means. These evaporative coolers and/or chiller coil systems are considered to be an air conditioning means. Cooling water is either made by means of mechanical compressors, absorption chillers recuperating waste heat or ice storage. Optionally ambient water at ambient temperature can also be considered providing the adiabatic exchange only. Foggers are also used as part of possible air conditioning means to inject water droplets within the ducting upstream the compressing means and downstream the air filter to reduce the inlet temperature from the dry towards the wet bulb temperature of the air provided to the compressing means. The air conditioning means may further comprise anti-icing means, and many other elements.

The known air intake systems have the disadvantage that the air filter needs frequent cleaning in order to keep the back pressure within acceptable ranges. The cleaning of the air filter may cause downtime of the air intake system and optionally the whole system of which the air intake system is part of, causing economical losses. The build up of contaminants and particles in the air filter itself cause a pressure drop over the filter to raise, which may cause yield decrease of both the compression system and the system of which the air intake system is part of.

Even in case self cleaning filters such as the Donaldson GDX are used, plugging of air filters may occur. Increases of pressure drop over the air filter frequently occurs, e.g. when the air filter is suffering of clay pollution and/or when the air intake system of the air intake system takes in air loaded with sea hanging fog, staying at the height of the air intake. The latter may cause temporary increased pressure drops over the air filter. E.g. when the filter is loaded with clay, heavy soot or cement, the clay, heavy soot or cement may partially liquefy due to the moisture of the fog, and spread and clog the filter to a larger extent. When the fog has disappeared and the ambient humidity is returned to lower levels, the pressure drop peak may disappear completely or partially. Sometimes the contaminants, when deliquefied, can be recrystallised and may be difficult to dislodge, causing the pressure drop peak disappear only partially. In industrial process, process effluents may load the air filter, such as NaOH effluents, gas pit flare separating CaS04 in nuclei with Ca and reforming on the filter media with S, or the limestone separating in nuclei form when provided to a steel mill bath to absorb the sulphur and alike. The process effluents may create clogging contamination on the filter as well, in case they are combined with a humidity which is too high.

Also cogeneration means supplying electricity and steam to process industries such as refineries releases pollutants such as ammonia and sulfur which may recristallize and clog the air filter and/or crystallise downstream the filter and foul the compressor blade, generating significant power loss. Eliminating or reducing one of the gases can prevent this event, which event is negative for the process downstream the filter..

Similar problems occur for gas intake systems in industrial processes where gas is to be compressed.

### Summary of the invention

It is an object of the present invention to provide good gas intake systems, e.g. those that have a reduced filtration load on the gas filter in the gas intake systems and/or those that avoid pressure peaks due to moisture on gas filters of the gas intake system, as well as methods of operating and constructing such gas intake systems. It is also an advantage of the present invention to provide gas intake systems, which enable the reduction or elimination, i.e. removing from the gas stream, of some elements which might generate pressure peaks at the gas filter due to moisture or provision of saturated gas to the filter, while optionally allowing the reduction of the gas temperature.

The above objective is accomplished by a method and device according to the present invention.

According to a first aspect of the present invention, a gas intake systems comprises
- a gas pickup means for taking in gas,
- a gas filter located downstream the gas pickup means and
- a gas chilling means for chilling intake gas, the gas chilling means having an inflow side for receiving intake gas and an outflow side for providing chilled gas to the gas filter, the gas chilling means for chilling intake gas being adapted to provide chilled gas having a dry bulb temperature and a wet bulb temperature, the dry bulb temperature being larger than the wet bulb temperature of the chilled air,

The gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means.

According to some embodiments, the gas chilling means for chilling intake gas is adapted to adjust the dry bulb temperature and/or the wet bulb temperature, for providing the dry bulb temperature being larger than the wet bulb temperature of the chilled air.

According to some embodiments, V1 being the flow or "volume per time unit" of chilled gas provided by the first gas stream and V2 being the flow or "the volume per time unit" of chilled gas provided by the second gas stream, the ratio V1/V2 is adapted to provide the dry bulb temperature being larger than the wet bulb temperature of the chilled air.

According to some embodiments, the gas chilling means for chilling intake gas may be adapted to chill intake gas to a dry bulb temperature differing from the wet bulb temperature of the chilled air according to a preset condition. The preset conditions for the difference between dry bulb temperature and wet bulb temperature of the chilled gas may depend on the poison of these temperatures on a psychometric diagram in case the gas is air. The dry bulb temperature of the chilled gas may be significantly less than the dry bulb temperature of even the wet bulb temperature of the ambient air. According to some embodiments, the gas chilling means further may comprise a flow adjusting means for adjusting the flow ratio of the first gas stream and the second gas stream. The flow ratio is to be understood as the flow of the first gas stream divided by the flow of the second gas stream.

According to some embodiments, the volume adjusting means may be adjusted in function of the dry bulb temperature and/or the wet bulb temperature of the chilled gas at the outflow side of the gas chilling means.

According to some embodiments, the guiding means may be an indirect heat exchanging means for chilling the second gas stream.

According to some embodiments, the cooling fluid of the indirect heat exchanging means is the chilling fluid of the direct contact chilling means .

According to some embodiments, the chilling means comprises a cooling fluid adjusting means for adjusting the temperature and/or the flow per time unit of cooling fluid provided to the chilling means.

According to some embodiments, the gas intake system may be an air intake system, optionally an air intake system of an air compressions system or of a turbine unit.

According to some embodiments, the gas intake system may be the gas intake system of a turbine unit.

According to a second aspect of the present invention, a gas chilling means is provided having an inflow side for receiving intake gas and an outflow side for providing chilled gas, the gas chilling means comprises means to divide the intake gas in a first gas stream and a second gas stream, the gas chilling means comprises a means for merging the first gas stream and the second gas stream at the outflow side of the gas chilling means, the gas chilling means comprises
- a direct contact chilling means for chilling the first gas stream by directly contacting of the first gas stream with a chilling fluid, the direct contact chilling means comprises a package, e.g. a package of perforated sheets, and a means for providing chilling water to the package, the package providing a plurality of hollow sections for guiding the first gas stream from the inflow side to the outflow side while allowing direct contact between the chilling fluid and the first gas stream,
- a guiding means for guiding the second gas stream to the outflow side, the guiding means preventing the second gas stream to directly contact the chilling fluid, the guiding means comprising at least one tube extending through one of the hollow sections of the direct contact chilling means.

According to some embodiments of the gas chilling means, the package of the direct contact chilling means may comprise at least two package sections, mounted consecutively in flow direction of the first air stream. Optionally, at least the most downstream portion of the package, e.g. the package section most downstream, is not provided with chilling water, in order to reduce the risk of entraining chilling water downstream by the first gas stream.

According to some embodiments of the gas chilling means, a void space may be provided between two consecutive package sections.

According to some embodiments of the gas chilling means, the at least one tube may comprise two consecutive tube sections,

According to some embodiments of the gas chilling means, the at least one tube may comprise two consecutive tube sections, between two consecutive tube sections a slits is provided extending in the in the void spaces between two consecutive package sections.

According to some embodiments of the gas chilling means, means for providing the chilled gas to the gas filter with most uniform temperature profile to prevent machinery unbalance is provided.

According to some embodiments of the gas chilling means, the guiding means comprising a multitude of tubes, the tubes being substantially equally distributed throughout the gas chilling means for preventing temperature stratification downstream

According to some embodiments of the gas chilling means, the gas chilling means may be the gas chilling means of a turbine unit.

According to some embodiments of the gas chilling means, the gas chilling means may be an air chilling means for chilling ambient air. The air chilling means may be a part of a turbine unit, providing chilled air in the turbine unit.

The gas chilling means according to the second aspect of the present invention may be mounted upstream the gas filter, where it has the advantage that the risk on moistening of the gas filter is reduced or even avoided. The gas chilling means according to the second aspect of the present invention may also be mounted between the gas filter and the gas compression means. Such mounting has the advantage that the gas intake system has an increased reliability because the risk on providing gas comprising moist droplets to the compression means in reduced or even avoided. Hence by reducing or avoiding droplets, damage and harm to the elements of the compression means, such as blades of the compressor, may be avoided to a large extent.

According to a third aspect of the present invention, a method for taking in gas in a gas intake system is provided, the gas intake system comprising
- a gas pickup means for taking in gas;
- the gas filter located downstream the gas pickup means;
- a gas chilling means between gas pickup means and gas filter, which gas chilling means is adapted to divide the intake gas into a first gas stream and a second gas stream,.

The method comprising the steps of
- dividing the intake gas into a first gas stream and a second gas stream,
- chilling the first gas stream by directly contacting of the first gas stream with the chilling fluid, guiding the second gas stream to the outflow side while preventing the second gas stream to contact the chilling fluid directly;
- merging the first gas stream and the second gas stream at the outflow side to provide chilled gas having a dry bulb temperature and a wet bulb temperature, the dry bulb temperature being larger than the wet bulb temperature of the chilled;
- providing the chilled gas to the gas filter.

Optionally means are provided for providing the chilled gas to the gas filter with most uniform temperature profile to prevent machinery unbalance. In order to avoid stratification of the gas or air stream, which may cause vibrations and alike in the air intake system and in the parts of the process system downwards the air intake system, optionally means are provided to distribute the second gas stream as uniform as possible in the first gas stream. Such means might be a uniform location or distribution of the guiding means, e.g. tubes throughout the gas chilling means, for providing a uniformly spread second gas flow V2, preventing temperature stratification downstream. In case the gas chilling means comprises a package providing the first gas stream to escape over a given surface, optionally a multitude of guiding means for guiding the second gas stream are used, which guiding means providing discharge points at the surface of the package. The discharge points are preferably equally distributed over the surface of the package. Optionally the guiding means may be equally pread or distributed over or across the intake surface of the air intake system.

Accordingly one or more embodiments of the present invention may have one or more of the following advantages.

Some embodiments of a gas intake systems have the advantage that the filter load is reduced. A part of the particles to be filtered from the process gas to be compressed, e.g. ambient air, are trapped by the chilling fluid (e.g. water such as ice water). These particles, which are already trapped and evacuated from the gas stream, will not have to be filtered by the gas filter. Thus the load on the filter is reduced, providing longer standing time for the gas filter, thus requiring less maintenance interventions per time unit. Next to the advantage that at least a part of the gas contaminants are trapped by the chilling fluid, which is preferably water, in case ambient air is to be compressed, organic air polluting contaminants are filtered or trapped from the air as well, which avoids or reduces fouling of e.g. compressor blades and alike to a large extent.

It was found that by dividing the intake gas in to a first gas stream being chilled using direct contact with the chilling fluid, and a second gas stream guided by means of a guiding to the outflow side, which guiding means preventing the second gas stream to directly contact the chilling fluid and by merging the first gas stream and the second gas stream at the outflow side of the gas chilling means, chilled gas near its saturation point may be provided. The gas of the first gas stream is chilled, and, because of the direct contact with the chilling fluid, its wet bulb temperature T1w and dry bulb temperature T1 d will be almost identical, if not identical. The first gas stream will be near its saturation or optionally will provide saturated gas.

The gas of the second gas stream, which may be chilled to some extent as well, will be chilled to a less extent. The wet bulb temperature T2w of the second gas stream will be less than the dry bulb temperature T2d, although it was noticed that some condensation could be formed due to cold surface condensation effects, e.g. when the guiding means are tubes out of thermally conductive material, e.g. steel such as stainless steel, being chilled by chilling fluid. An appropriate selection of dimensions of the guiding means, may assure the provision of a second gas stream having a wet bulb temperature T2w being less than the dry bulb temperature T2d.

It was found that the dry bulb temperature of the first gas stream T1d is less than the dry bulb temperature T2d of the second gas stream. By merging the first and second gas stream at the outflow side of the chilling means for providing chilled gas, it was found that even if the first gas stream provides saturated gas, because of the merging of the two streams, the chilled gas after merging may be close to its saturation point, however the wet bulb temperature of the chilled gas will be less than the dry bulb temperature. Hence creation of fog or even droplets of fluid is avoided.

Thus it may be ensured that the chilled gas provided to the gas filter is not saturated or oversaturated, while being cooled significantly as compared to the dry bulb temperature of the ambient air or gas taken in. Such saturation or oversaturation could cause the pollutants and contaminants trapped on the gas filter to interact with the water particles of dew or fog, which possible could be formed, such interaction causing gas pressure over the gas filter to rise quickly and possibly causing a pressure peak which is not allowable for the downwards located process elements.

The reduction of the filter load to the gas filter of a gas intake system may result in a longer standing time for the gas filter. Alternatively, in case the standing time of the gas filter is not a major issue, the dimensions of the gas filter may be reduced for a given gas volume to be filtered per time unit, or the gas volume to be filtered per time unit may be increased for a given gas filter dimension, in case the standing time of the gas filter may remain unchanged.

Some embodiments of a gas intake systems have the advantage that, especially in case of compression of ambient air and in case the air compression systems are operational in dry regions, the air provided to the compression means is already chilled, which increases the yield of the compression means and thus the yield of the system of which the air intake system is part of, e.g. a turbine unite, e.g. a gas turbine unit.

According to some embodiments of gas intake systems according to the first aspect of the present invention, the flow of the first and second gas stream in the gas chilling means is to be controlled. This may be done during the designing of the gas intake system, where the different elements, and the dimensions of the different elements are designed and controlled e.g. by using design day conditions and process conditions in case of air intake systems. Also other aspects such as geographical and geological aspects may be taken in to account during designing of the gas intake system, more particular an air intake system. The design takes into account the "worst case" ambient conditions, for which conditions the chilling means and the gas intake system is designed and dimensioned.

Optionally the gas intake system is provided with a means, e.g. a flow adjusting means, for adjusting the flow ratio of the first gas stream and the second gas stream. Preferably the flow of the second gas stream is adjusted. Such means may be a valve means or make use of automated system such as a electromagnetically controlled valves, e.g. valve controlled with coils, or valves, such as rubber valves, controlled with compressed air, e.g. a rubber chamber in the pipe, swelling with the air injected via appropriate air provision means.

In case the second air stream is guided via channels such as tubes, a redundant amount of channels or tubes may be installed as compared to the number of channels or tubes necessary to meet the worst case conditions. Some channels or tubes can be physically plugged at their downstream side, in order to prevent air passing through the plugged channels or tubes. Plugging at the downstream side is preferred in order to prevent any droplets of condense created inside the channel or tube to be entrained. When necessary, some plugs could be removed in case the ambient or other conditions require this removal.

If V1 represents the volume per time unit of chilled gas provided by the first gas stream and V2 is the volume per time unit of chilled gas provided by the second gas stream, the ratio V1/V2 may be adjusted in order to keep the dry bulb temperature of the chilled gas above but as close to the wet bulb temperature of the chilled gas.

Such adjustment may be done manually by means of the intervention of an operator. Optionally the gas intake system comprises means for measuring gas properties such as in case of air compression systems: relative or absolute humidity of the ambient air, wet or dry bulb temperature of the ambient air, ambient air pressure and alike, and air properties of the chilled air after the air chilling means, such as pressure, wet and/or dry bulb temperature, dew point, humidity and alike. The gas intake system may comprise a means for adjusting the gas flow rates of the first and second gas stream in function of the measured gas properties. The adjustment can be done automatically in this particular case. The adjustment is done in such a way that the temperature of the chilled gas at the outflow side of the gas chilling means, i.e. of the chilled gas provided to the gas filter, is above the dew point of the chilled gas. More preferred, intake gas is chilled to provide chilled gas having a dry bulb temperature being larger the wet bulb temperature of the chilled air. The dry bulb temperature may differ from the wet bulb temperature of the chilled air according to a preset condition. The preset conditions for the difference between dry bulb temperature and wet bulb temperature of the chilled air may depend on the poison of these temperatures on a psychometric diagram in case the gas is air. The dry bulb temperature of the chilled gas may be significantly less than the dry bulb temperature of even the wet bulb temperature of the ambient air.

This to create a safety margin for avoiding creation of fog or small liquid particles in the air provided to the air filter, which may interact with the trapped particles and contaminants on the air filter.

The guiding means for guiding the second as stream may comprise a bypass for bypassing gas over the direct contact chilling means of direct contact heat exchanging means. The gas discharging from the guiding means is substantially identical to the gas being taken in by the guiding means.

Optionally the guiding means for guiding the second gas flow may be constructed as an indirect heat exchanging means, cooling the second gas stream. The indirect heat exchanging means may use the chilling fluid of the direct contact chilling means as cooling fluid. Although the second gas stream is not cooled to its dewpoint temperature, in some situations, liquid condensation may occur at the cooling surfaces with which the second gas stream is in contact with, e.g. at the inner side of the tubes, in case the second gas stream is guided through a number of tubes, which are cooled at the outer side by a cooling fluid. The guiding means may therefore comprise means to evacuate possible condensate, resulting from the cooling of the second gas stream.

At the outflow side of the gas chilling means, the first gas stream and the second gas stream are merged for providing the chilled gas. Optionally, means are provided to ensure mixing of both gas streams, resulting in chilled gas discharged from the outflow side, having substantially uniform properties over the outflow side. In order to avoid stratification of the gas or air stream, which may cause vibrations and alike in the air intake system and in the parts of the process system downwards the air intake system, optionally means are provided to distribute the second gas stream as uniform as possible in the first gas stream. Therefore, in case the gas chilling means comprises a package providing the first gas stream to escape over a given surface, optionally a multitude of guiding means for guiding the second gas stream are used, which guiding means providing discharge points at the surface of the package. The discharge points are preferably equally distributed over the surface of the package. In such a way, a maximum temperature difference within the gas stream of less than 2°C may be obtained, which maximum of temperature difference of some 2°C at the nose of the machinery is considered as a sufficiently uniform temperature distribution..

The chilling means may further comprises a chilling fluid adjusting means for adjusting the temperature and or the volume per time unit of chilling fluid provided to the chilling means. The adjustment of the temperature of the chilling fluid, and/or the tuning or adjustment of the amount of chilling water provided per time unit, may be used to control the dry bulb temperature and the wet bulb temperature of the chilled gas.

According to a fourth aspect of the present invention, a method to modify an existing gas intake system is provided, resulting in a modified gas intake system having the advantages as set out above. The existing gas intake system comprising
- a gas pickup means for taking in gas,
- the intake gas filter located downstream the gas pickup means.

The method according to the fourth aspect of the present invention comprises the step of
- providing a gas chilling means for chilling intake gas, the gas chilling means having an inflow side for receiving intake gas and an outflow side for providing chilled gas to the gas filter, the gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means, the chilling means being adapted to provide chilled gas having a dry bulb temperature being larger than the wet bulb temperature of the chilled gas, and
- coupling the inflow side of the gas chilling means to the gas pickup means and coupling the outflow side of the gas chilling means to the gas filter.

According to a fifth aspect of the present invention, a method for constructing of a gas intake system is provided. The method of construction of a gas intake system comprises the steps of
- providing a gas pickup means for taking in gas,
- providing the intake gas filter located downstream the gas pickup means,
- providing a gas chilling means for chilling intake gas, the gas chilling means having an inflow side for receiving intake gas and an outflow side for providing chilled gas, the gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means, the chilling means being adapted to provide chilled gas having a dry bulb temperature being larger than the wet bulb temperature of the chilled gas, and
- coupling the inflow side of the gas chilling means to the gas pickup means and coupling the outflow side of the gas chilling means to the gas filter.

In accordance with some embodiments of the method, where the gas intake system is an air intake system for compressing ambient air being intake air of the air intake system, the air intake systems are especially advantageous for use in world regions where dry and hot ambient conditions occur frequently. In such regions, the dry ambient air is loaded with numerous dry particles and liquid, amorphous or gaseous contaminants, which are to be removed from the air provided to the compression means of the air compression system. The use of a method according to the second aspect of the present invention, using an air chilling means being part of the air intake system according to the first aspect of the present invention, has the advantages that the air provided to the compression means is reduced in temperature, which increases the yield of the air compression, and of the system of which the compression system is part of. It also has the advantage that a part of the dry particles and contaminants in the ambient air is already knocked down and removed from the air stream prior to providing the air stream to the air filter, resulting in longer standing periods of the air filter, or a reduction of the load of the air filer in the air compression system. The method further has the advantage that the provision of saturated or over-saturated chilled air to the air filter is minimized or even avoided.

Some embodiments of the method have the advantage that existing and operational gas intake systems can be upgraded, i.e. provided with a gas intake system according to the first aspect of the present invention, without the need of dismantling the already installed gas filters and gas compression means. It may be placed upstream, or even in front of the existing gas filters, and only the existing gas pickup means is to be displaced.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematically view of a gas intake system more particular an air intake system, according to the first aspect of the present invention.
Fig. 2 is more detailed schematically view of the gas chilling means of the gas intake system of Fig. 1.
Fig. 3 is a detail of the packing of the direct contact chilling means being part of the gas chilling means of the gas intake system of Fig. 1.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

The term "flow" is to be understood as the volume of a fluid per time unit provided.

For gas-liquid system such as an air-water system, following definitions hold:
- The dry bulb temperature of the gas such as air is the temperature of a gas indicated by a thermometer.
- The wet bulb temperature of a gas such as air is the temperature at which a liquid or liquid water, by evaporation into the gas such as air, can bring the gas such as air to saturation adiabatically at the same temperature. The wet bulb temperature is the temperature indicated by a wet bulb psychometer.
- The dewpoint temperature is the temperature at which the condensation of the liquid vapour such as water vapour in a space begins for a given state of vapour concentration or humidity and pressure as the temperature of the vapour is reduced. The temperature corresponds to saturation (100 percent relative humidity) for a given absolute humidity at constant pressure.
- Saturated gas or air means gas or air in which no additional liquid vapour or moisture can be added to the gas-liquid, e.g. air-water vapour mixture at given pressure and temperature.
- The saturation temperature is the temperature at which no further liquid vapour such as moisture can be added to the gas-liquid, e.g. air-water vapour mixture. The saturation temperature equals the dew point temperature.
- The relative vapour concentration or the relative humidity is the ratio of the quantity of liquid vapour or water vapour present in the gas or air compared to the quantity of liquid vapour or water vapour present in saturated gas or air at the same temperature and barometric pressure.
In the light of the present invention, the above definitions are defined to the more general gas-liquid system in a similar way to that for an air-water system.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

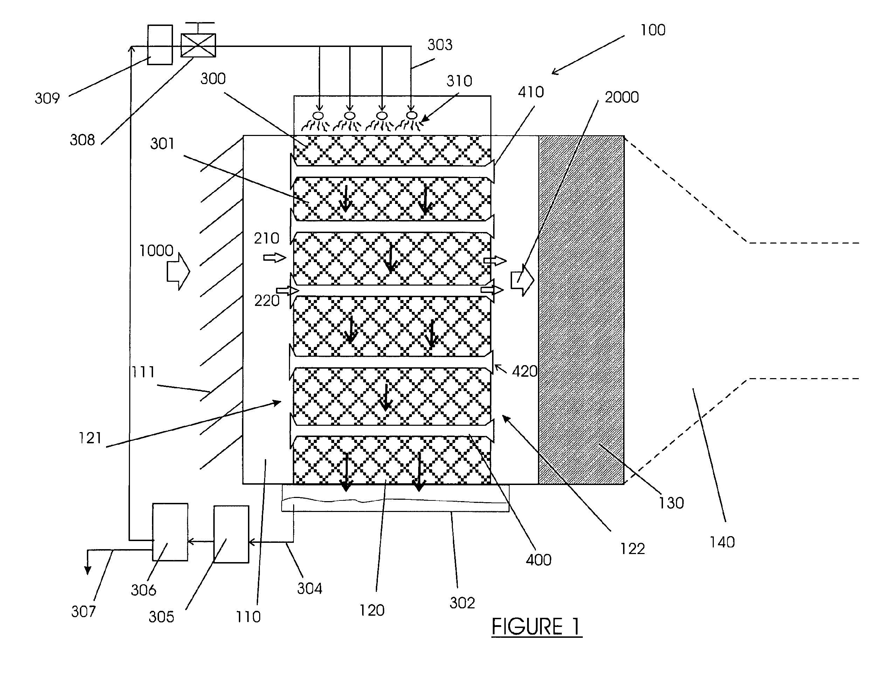

A gas intake system 100 according to the first aspect of the present inventing is shown schematically in Fig. 1. The gas intake system 100 is an air intake system, comprising an air pickup means 110 for taking in air 1000 from ambient. It comprises a set of sheds 111 to prevent entrance of rain and snow in the air pickup means.

The air intake system 100 may be coupled to, and provided for providing intake air to an air compressing means1400 located downstream the air intake system 100. The air intake system 100 comprises an air filter 130 located downstream the air pickup means 110 and before, i.e. upstream the air compressing means 1400.

The air chilling means 120 has an inflow side 121 for receiving air 1000 and an outflow side 122 for providing chilled air 2000 to the air filter 130. The air chilling means 120 is adapted to chill ambient air 1000 thereby providing chilled air 2000 with a temperature above its dew point, i.e. air provided in a condition where the dry bulb temperature is above the wet bulb temperature, and the dry bulb temperature of the chilled air being less than the dry bulb temperature of the ambient air.

The ambient air 1000 is divided in a first air stream 210 and a second air stream 220.

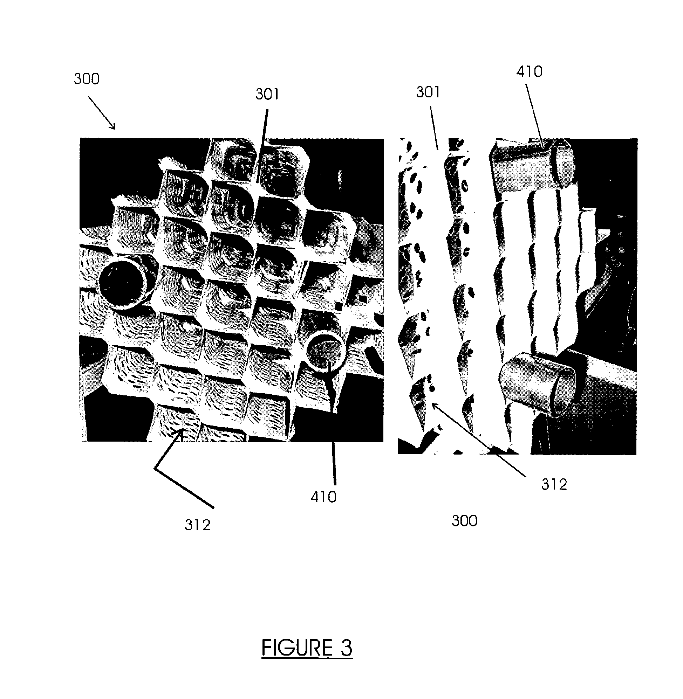

The air chilling means 120 has a direct contact chilling means 300 for chilling the first air stream 210 by directly contacting of the first air stream 210 with a chilling fluid 310. As will be described more in detail by means of Fig. 3, the direct contact chilling means 300 or direct contact heat exchanging means may comprise a packing 301 which allows chilling fluid 310 to make direct contact with the first air stream 210. The chilling fluid, such as ice or cooled water, is provided at the topside of the packing 301 using appropriate feeding pipes 303. The chilling fluid 310 seeps through the packing 301 downwards where it is gathered in a reservoir 302. Via fluid guiding tubes 304 the fluid is provided to a fluid filter unit 305 for removal of particles and contaminants, which were filtered from the first air stream 210 in the direct contact heat chilling means 300. The chilling fluid 310 is than stored and cooled using a storage system 306 from which the chilling fluid is provided back to a cooling means 307 and an adjustable valve 308 to the feeding pipes for being provided to the packing 301.

During chilling of the first air stream in the direct contact chilling means 300, the first air stream is reduced in temperature and humidified optionally up to its saturation point. It is even possible to cool the first air stream below its dewpoint, so water is extracted from the first air stream. This condensate flows down together with the chilling fluid 310. The first air stream leaving the direct contact chilling means 300 at the outflow side 122 is thus cold and optionally at its saturation point.

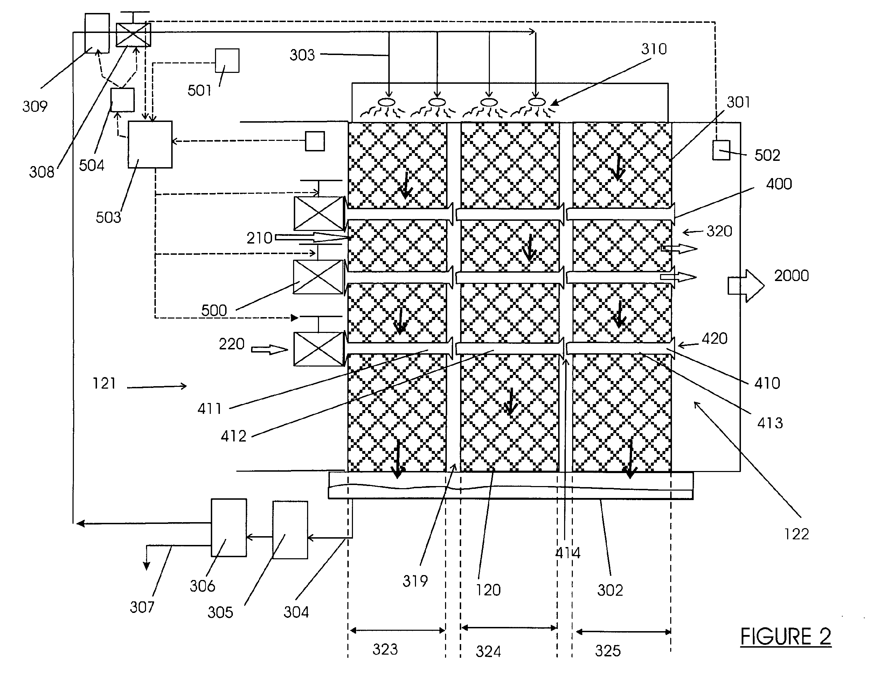

The air chilling means 120 has a guiding means 400 for guiding the second air stream 220 to the outflow side 122. The guiding means 400 prevents the second air stream 220 to directly contact the chilling fluid 310. As shown in Fig. 1, the guiding means 400 is provided in this embodiment as an indirect heat exchanging means, comprising a number of tubes 410. The second air stream 220 flows through the tubes 410 from the inflow side 121 to the outflow side 122. The outer wall of the tubes 410 are brought into contact with the chilling fluid 310. Thermal energy, provided by the second air stream 122 at the inner side of the tubes 410, is conducted to the chilling fluid 310 through the walls of the tubes 410. This may cause a temperature reduction of the second air stream 122. It was noticed that by controlling the flow of the first and second air stream, the second air stream may be cooled to a temperature well above its dewpoint. In spite of this, some water may condensate in the tubes 410. As will be explained in more detail in Fig. 2, the tubes may be provided with means to evacuate the condensate from its internal volume.

The first air stream 210 and the second air stream 220 are merged at the outflow side of the air chilling means for providing the chilled air 2000 at the outflow side 122 of the air chilling means 120. The merging of the air streams has the effect that the temperature of the first air stream is raised. This causes the dry bulb temperature of the first air stream to become above the wet bulb temperature of the first air stream, even in case the first air stream was saturated prior to merging. The humidity from the second air stream may influence the humidity of the chilled air to some extent, but is not sufficient to bring the wet and dry bulb temperature of the merged air streams, thus of the chilled air, to become equal. The dry bulb temperature will remain more than the wet bulb temperature. Hence saturation of the chilled air 2000 is avoided. The controlled flows of first and second air stream cause the chilled air 2000 to have a temperature above its dew point, hence reducing or even avoiding fogging at the outflow side 122.

A more detailed schematically view of the air chilling means 120 is shown in Fig. 2. A detail of the packing 301 of the direct contact chilling means 300, provided with tubes 410 of the guiding means 400 is shown in Fig. 3.

The air chilling means 120 comprises a number of consecutive package sections 323, 324 and 325. Each package section 323, 324 and 325 comprises a packing 301 which forms the mechanical matrix of the direct contact chilling means 300. As better shown in Fig. 3, the packing 301 may cellular blocks or honey-comb like structures, e.g. COLDFREE TR40V blocks of Hamon & Cie (Belgium), consisting a PVC thermoformed perforated sheets to form an assembly of more or less square sections standing on a side of the square section. The open end of the channels or hollow sections 312 are facing the air flow and give very low delta p. Chilling fluid 310, such as chilling water, is provided at the top 313 of the package 301 The chilling fluid, e.g. chilling water, drips downwards, through the perforations of the perforated sheets, making a turbulent water layer along each corrugation of the sheet, the first air stream 210 is cooled or chilled by passing through each hollow section 312.

A water distribution system made of a manifold and a series of feeding pipes 303 at a given distance is connected to the cold side of the chiller circuit, providing cold chilling fluid 310. The last package section 325 of the packing optionally remains without chilling fluid feeding to insure no water droplets are entrained downstream. Alternatively, in case the last package section 325 is provided with chilling fluid, a droplet catcher section (not shown in Fig. 2) to act as a safety for any water leaks and chilling water entrained with the first air stream may be provided, which can be the standard air intake hood protection including the droplet catcher and flow equalizers and alike.

The chilling fluid circuit may further comprise a fluid filter unit 305 and a cooling and storage unit 306 comprising fluid cooling unit or fluid cooler and water tank, optionally in multiple sections, connected to the return line of the air cooler by means of pumps and water level control. An overflow system 307 to feed out the produced condensed water, which is entrained by the chilling fluid 310, may be provided.

The consecutive sections may be provided as a modular casing divided, in several sections on the height, determined by the acceptable delta p gradient downstream, the in and out chilling fluid temperature, the flow velocities of the first and second air stream and other process and environment parameters.

Turning now to the guiding means 400, the guiding means is provided as an indirect heat exchanging means comprising a number of tubes 410 which may be provided through the consecutive package sections 323, 324 and 325 of the direct contact chilling means. A given quantity of tubes 410 with given dimension are installed depending upon the delta p across the packing and across the whole air chilling means 120, i.e. between inflow side 121 and outflow side 122 and the desired delta t over the air chilling means 120 and the delta t over the indirect heat exchanging means 400 required for the application. The discharging ends or points 420 of the tubes 410 are equally distributed over the discharging surface 320 of the package 301 for providing a uniform distribution of the second gas stream 220 in the first gas stream 210.

During designing of the air intake system 100, and taking the ambient conditions of reference or designing days into account for the location here the air intake system 100 is to be operational, the quantity of tubes 410, the tube dimensions, the tube materials and alike may be chosen to provide in a controlled way the flow or volume per time unit of the second air stream 220. As the flow/ delta p characteristic of the tube 410 is known, it is possible to determine the quantity of the second air stream 220 needed to prevent any saturation downstream at the outflow side 122 of the air chilling means 120 after merging the first and second air stream 210, 220, taking a desired safety margin into account. The tubes 410 may be provided from copper, aluminum or stainless steel. However in case the choice of such thermally conductive materials would provide the creation of excessive condense of the second air stream, polymer materials such as PVC may be used.

In case it is preferred to have the flows or volumes per time unit of first and second air stream adjustable, the air chilling means 120 may comprise a flow adjusting means 500 for adjusting the flow ratio of the first air stream and the second air stream. Optionally the air chilling means 120 may comprises means 501 for measuring ambient air properties such as relative or absolute humidity of the ambient air, wet or dry bulb temperature of the ambient air, ambient air pressure and alike, and means 502 to measure air properties of the chilled air after the air chilling means, such as pressure, wet and/or dry bulb temperature, dew point, humidity and alike. The air intake system may comprise a means 503 for adjusting the flow ratio of the first air stream and the second air stream or the air flow rates of the first and second air stream in function of the measured air properties, in the process and/or ambient. The adjustment can be done automatically in this particular case, which adjustment can be controlled by a control means 503, adjusting the means 500 for adjusting the flow rates in function of the measured air properties by measuring means 501 and 502. The adjustment can be controlled by a control means 503 in function of the wet bulb temperature and the dry bulb temperature.

The chilling means may comprise a chilling fluid adjusting means 504 for adjusting the temperature and or the flow or volume per time unit of chilling fluid provided to the chilling means, i.e. for controlling the cooling means 309 or the valve 308.

A bellmouth or tapered or funnelling shape at the tube inlet section can reduce the inlet loss of each tube 410.

The tubes 410 may be made such that any condensation within the tube is eliminated. This may be obtained by providing the tubes 410 in several consecutive tube sections 411, 412 and 413. Each tube section may extend through one of the package sections 323, 324 and 325 of the direct contact chilling means 300. Between two consecutive tube sections 411 and 412 or 412 and 413, slits 414 extending in the in the void spaces 319 between two consecutive package sections 323, 324 and 325 of the direct contact chilling means 300. Alternatively, not shown in Fig. 2, each slit may extend in one of the package sections. The condensed water in a tube section 411, 412 and 413 of a tube may be evacuated via small slits 414 in between the tube sections or in the package, or may be evacuated by dripping out of the last tube section 413 at the outflow side 122 of the air chilling means 100.

It is advantageous to provide a gas intake system according to the first aspect of the present invention, as the chilled gas is sufficiently dry to avoid moistening of the gas filter downstream, thus avoiding the contamination and particles trapped by the gas filter to clog due to moistening. For some embodiments, e.g. when using a direct contact chilling means for chilling at least a part of the intake gas, the part of the intake gas directly contacting the chilling fluid will partially be cleaned, hence the amount of contaminants and particles guided to the gas filter will at least partially be reduced. Especially in case the gas intake system is an air intake system for compression of ambient air, also VOC may be removed from the air by means of the direct contact chilling means. This has the advantage that the amount of VOC's that may contaminate downstream parts of the unit of which the compression system is part of, is reduced.

It is well understood by the skilled person that the air intake system as set out using Fig. 1, Fig. 2 and Fig. 3 may be used as a gas intake system in industrial processes, whereby only slight modifications are necessary to compress process gas other than air, in stead of compression of ambient air. It is also understood that the air intake system may be used to compress air other than ambient air.

Turning to the second aspect of the present invention, it is understood that the gas intake system as shown in Fig. 1, Fig. 2 and Fig. 3 is used to provide e.g. compressed air to e.g. a turbine unit such as a gas turbine, or an air conditioning system. The use of the gas intake system as shown in Fig. 1, Fig. 2 and Fig. 3 has the advantage that the chilling fluid removes a part of the contamination in the first air stream, hence the loading on the gas filter downstream the air chilling means is reduced. As moisture creation in the chilled gas, such as chilled air, is avoided prior to the gas filter, the filter will not be moistened and the filtered contaminants on the gas filter will be prevented from reacting or clogging due to the moistening.

Turning to the third aspect of the present invention, reduction of the temperature of the gas provided to e.g. a gas compressing means by means of a gas intake system according to the first subject of the present invention can easily be obtained, especially in case the gas intake system is an installed air intake system such as the air intake system of an existing turbine unit.

The advantage of the gas intake system is that the gas chilling means, especially the air chilling means of an air intake system, can be easily mounted in the existing process lines.

The reduction of the temperature of the gas provided to e.g. the gas compressing means only requires to dismantle the existing gas intake system, in particular the air pickup means of an air intake system, and the addition of the gas chilling means, in particular the air chilling means of the air intake system according to some embodiments of the present invention. After installation of the gas chilling means, the gas pickup means needs to be provided or coupled at the inflow side of the gas chilling means. In case the gas chilling means, in particular the air chilling means comprises a direct contact chilling means for chilling at first part of the gas or air to be chilled, the method according to the third aspect of the present invention has the additional advantage of reducing the load on the gas filter or air filet installed after the gas or air chilling means.

Other arrangements for accomplishing the objectives of the gas intake system and a method for taking in gas in a gas intake system, a method for modifying an existing gas intake system and a method for constructing a gas intake system, embodying the invention, will be obvious for those skilled in the art.

It is understood that an indirect gas chilling means, e.g. chilling coils being provided with chilling fluid at one side of the tubular coil and gas to be chilled at the other, preferably the outer side of the tubular chilling coil, the indirect gas chilling means provided for chilling intake gas and being adapted to provide chilled gas at a temperature above its dew point, may be used as an element to provide an embodiment of the gas intake systems according to the first aspect of the present invention. It is understood as well that the use of an indirect gas chilling means for chilling the first gas stream in case a gas chilling means comprising means to divide the intake gas in a first gas stream and a second gas stream may be used as well to provide an embodiment of the gas intake systems according to the first aspect of the present invention.

It is to be understood that although preferred embodiments, specific constructions and configurations, as well as materials, have been discussed herein for devices according to the present invention, various changes or modifications in form and detail may be made without departing from the scope and spirit of this invention. Steps may be added or deleted to methods described within the scope of the present invention.

## Claims

1. A gas intake system comprising
• a gas pickup means for taking in gas,
• a gas filter located downstream of the gas pickup means and
• a gas chilling means for chilling intake gas, the gas chilling means having an inflow side for receiving intake gas and an outflow side for providing chilled gas to the gas filter, the gas chilling means for chilling intake gas being adapted to provide chilled gas having a dry bulb temperature and a wet bulb temperature, the dry bulb temperature being larger than the wet bulb temperature of the chilled air,
wherein the gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means.

2. A gas intake system according to claim 1, wherein the gas chilling means for chilling intake gas is adapted to adjust the dry bulb temperature and/or the wet bulb temperature for providing the dry bulb temperature being larger than the wet bulb temperature of the chilled air

3. A gas intake system according to any one of the claims 1 to 2, wherein V1 is the flow of chilled gas provided by the first gas stream, V2 is the flow of chilled gas provided by the second gas stream, the ratio V1/V2 is adapted to provide the dry bulb temperature being larger than the wet bulb temperature of the chilled air.

4. A gas intake system according to claim 3, wherein the gas chilling means further comprises a flow adjusting means for adjusting the flow ratio of the first gas stream and the second gas stream.

5. A gas intake system according to claim 4, wherein the flow adjusting means is adjusted in function of the dry bulb temperature and/or the wet bulb temperature of the chilled gas at the outflow side of the gas chilling means.

6. A gas intake system according to any one of the claims 1 to 5, wherein the guiding means is an indirect heat exchanging means for chilling the second gas stream.

7. A gas intake system according to claim 6, wherein the cooling fluid of the indirect heat exchanging means is the chilling fluid of the direct contact chilling means .

8. A gas intake system according to any one of the claims 6 to 7, wherein the chilling means comprises a chilling fluid adjusting means for adjusting the temperature and or the volume per time unit of chilling fluid provided to the chilling means.

9. A gas intake system as in ay one of the claims 1 to 8, wherein the gas intake system is an air intake system.

10. An air compression system comprising an air intake system as in claim 9.

11. A turbine unit comprising an gas intake system as in any one of the claims 1 to 9.

12. A method for taking in gas in a gas intake system, the gas intake system comprising
• a gas pickup means for taking in gas;
• the gas filter located downstream the gas pickup means;
• a gas chilling means between gas pickup means and gas filter, which gas chilling means is adapted to divide the intake gas into a first gas stream and a second gas stream,
the method comprising the steps of
• dividing the intake gas into a first gas stream and a second gas stream,
• chilling the first gas stream by directly contacting of the first gas stream with the chilling fluid, guiding the second gas stream to the outflow side while preventing the second gas stream to contact the chilling fluid directly;
• merging the first gas stream and the second gas stream at the outflow side to provide chilled gas having a dry bulb temperature and a wet bulb temperature, the dry bulb temperature being larger than the wet bulb temperature of the chilled;
• providing the chilled gas to the gas filter.

13. A method for taking in gas in a gas intake system, wherein means are provided for avoiding temperature stratification downstream the air intake system.

14. A method for modifying an existing gas intake system, the existing gas intake system comprising
• a gas pickup means for taking in gas,
• the intake gas filter located downstream the gas pickup means and the gas compressing means,
the method comprises the step of
• providing a gas chilling means for chilling intake gas, the gas chilling means having an inflow side for receiving intake gas and an outflow side for providing chilled gas to the gas filter, the gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means, the chilling means being adapted to provide chilled gas having a dry bulb temperature being larger than the wet bulb temperature of the chilled gas, and
• coupling the inflow side of the gas chilling means to the gas pickup means and coupling the outflow side of the gas chilling means to the gas filter.

15. A method for constructing a gas intake system, comprising the steps of
• providing a gas pickup means for taking in gas,
• providing the intake gas filter located downstream the gas pickup means,
• providing a gas chilling means for chilling intake gas, the gas chilling means having an inflow side for receiving intake gas from the gas pickup means and an outflow side for providing chilled gas to the intake gas filter, the gas chilling means comprises means to divide the intake gas in a first gas stream and a second gas stream, the gas chilling means has a direct contact chilling means for chilling the first gas stream by directly contacting of the first gas stream with a chilling fluid, the gas chilling means has a guiding means for guiding the second gas stream to the outflow side, the guiding means preventing the second gas stream to directly contact the chilling fluid, the first gas stream and the second gas stream merging at the outflow side of the gas chilling means for providing the chilled gas at the outflow side of the gas chilling means, the chilling means being adapted to provide chilled gas having a dry bulb temperature being larger than the wet bulb temperature of the chilled gas, and
• coupling the inflow side of the gas chilling means to the gas pickup means and coupling the outflow side of the gas chilling means to the gas filter.

16. A gas chilling means having an inflow side for receiving intake gas and an outflow side for providing chilled gas, the gas chilling means comprises means to divide the intake gas in a first gas stream and a second gas stream, the gas chilling means comprises a means for merging the first gas stream and the second gas stream at the outflow side of the gas chilling means, the gas chilling means comprises
• a direct contact chilling means for chilling the first gas stream by directly contacting of the first gas stream with a chilling fluid, the direct contact chilling means comprises a package and a means for providing chilling water to the package, the package providing a plurality of hollow sections for guiding the first gas stream from the inflow side to the outflow side while allowing direct contact between the chilling fluid and the first gas stream,
• a guiding means for guiding the second gas stream to the outflow side, the guiding means preventing the second gas stream to directly contact the chilling fluid, the guiding means comprising at least one tube extending through one of the hollow sections of the direct contact chilling means.

17. A gas chilling means according to claim 15, wherein the gas chilling means comprises a means for for avoiding temperature stratification downstream the air intake system

18. A gas chilling means according to any one of the claims 16 to 17, wherein the package of the direct contact chilling means comprises at least two package sections, mounted consecutively in flow direction of the first air stream.

19. A gas chilling means according to claim 18, wherein a void space is provided between two consecutive package sections.

20. A gas chilling means according to any one of the claims 16 to 19, wherein the at least one tube comprises two consecutive tube sections.

21. A gas chilling means according to any one of the claims 16 to 20, wherein the at least one tube comprises two consecutive tube sections, between two consecutive tube sections a slits is for removing condense from the inner volume of the tube sections to the package.

22. A gas chilling means according to any one of the claims 16 to 21, wherein the guiding means comprising a multitude of tubes, the tubes being substantially equally distributed throughout the gas chilling means for preventing temperature stratification downstream.

23. A gas chilling means as in any one of the claims 15 to 22, the gas chilling means being an air chilling means for chilling ambient air.

24. An air intake system comprising an air chilling means as in claim 23

25. A turbine unit comprising a gas chilling means as in any one of the claims 15 to 23.
